Europäisches Patentamt

European Patent Office

Office européen des brevets

(11) Publication number: **0 300 603**
**A1**

## (12) EUROPEAN PATENT APPLICATION

(21) Application number: 88305181.5

(22) Date of filing: 07.06.88

(51) Int. Cl.⁴: **B60P 1/46**

(30) Priority: 23.07.87 GB 8717507

(43) Date of publication of application:
25.01.89 Bulletin 89/04

(84) Designated Contracting States:
AT BE CH DE FR GR IT LI LU NL SE

(71) Applicant: **Tidd Strongbox Limited**
**Sunderland Road**
**Sandy Bedfordshire SG19 1QY(GB)**

(72) Inventor: **Warner, Peter Stuart**
**7 High Street**
**Clophill Bedfordshire(GB)**

(74) Representative: **Nash, Keith Wilfrid et al**
**KEITH W. NASH & Co. Pearl Assurance**
**House 90-92 Regent Street**
**Cambridge CB2 1DP(GB)**

(54) Improvements in and relating to load carrying vehicles.

(57) A load carrying vehicle has a pair of rear doors (38, 40) to open refrigerated compartments (12 to 22), and a loading platform (42) releasably hinged to the rear of the compartments and pivotable into an upright position to partly close the compartments. The doors incorporate vertically movable carriages (26, 28) which are engageable with the platform when horizontal to act as a tail lift. The carriages may include arms (44, 50) with pins (52) locatable under the platform, the arms being automatically stored within the doors when the platform is released and the carriages are raised above their highest delivery position.

Fig. 1

EP 0 300 603 A1

## Improvements in and relating to load carrying Vehicles

### Field of invention

This invention concerns load carrying vehicles particularly such vehicles having load elevating means commonly referred to as a tail lift, at the rear thereof, for raising and lowering articles to be loaded and unloaded. The invention is of particular application to refrigerated vehicles.

### Background to the invention

The incorporation of a tail lift into a load carrying vehicle such as a van has always presented a problem where it is important that the load carrying volume of the vehicle should not be eroded and where the open rear end of the load carrying compartment is to be sealed by doors to prevent the ingress of warm air.

It is an object of the present invention to provide a load carrying vehicle whose interior is at least in part capable of refrigeration and has a tail lift which when not in use does not intrude into the load carrying compartment and does not impede the closure of the open rear end of the load carrying compartment to maintain refrigeration of the interior.

It is another object of the invention to provide an improved rear end closure for a refrigerated load carrying vehicle which assists in keeping the interior of the load carrying compartment refrigerated even during loading and unloading.

### Summary of the invention

According to one aspect of the present invention a load carrying vehicle in which the rear of the load carrying compartment can be opened to admit the loading and unloading of articles and which includes at least a pair of doors which in their open position extend rearwardly of the vehicle body generally parallel to the sides thereof and which in their closed position, close off the rear of the compartment, comprises:

(a) means for retaining the two doors in their open and closed positions,

(b) a platform hingedly attached to the rear of the compartment by means of separable hinge means for tilting into a vertical plane to enable the doors to be closed and into a horizontal plane to serve as a loading platform,

(c) platform support means located in each of two doors engageable by the platform when the latter is lowered into its horizontal position,

(d) means for separating the platflorm hinge means to enable the latter to be raised and lowered by the support means, and

(e) hoist means attached to the platform support means to effect the upward and downward movement thereof.

Preferably the support means comprise carriages movable up and down slideways located within the doors, each carriage including at least a pair of arms which engage the underside of the platform.

Preferably each arm is pivotable into a lower position in which it extends in a generally horizontal manner so as to protrude into the space between the two doors, to engage the underside of the platform as the latter is lowered and is pivotable into an upright position for stowing within the doors, so a not to protrude into the interior of the load carrying compartment, when the doors are closed.

Conveniently the platform can be lowered to a lowermost position, at which trolleys can be rolled onto the platform at ground level, through an intermediate position at which trolleys can be loaded for example from a loading bay, to at least one elevated delivery position at which trolleys can be rolled on or off the platform onto a load carrying deck within the load carrying compartment.

Typically there are two or more such decks within the vehicle, one above another.

Conveniently when the platform has been detached from the arms, the latter are automatically pivoted into their upright positions if the carriages are raised above the highest delivery position, and the carriages are left in this position within the doors when the latter are to be closed, so that the arms remain in their upright position and do not protrude into the interior of the load carrying compartment when the doors are closed.

Rollers are preferably provided on the two arms nearest to the door hinges, which engage the rear of the hinged platform when the latter is in its upright vertical position, so that as the carriages are lowered relative to the platform, the latter can pivot in a rearward and downward manner about the axis defined by the hinge connection between the platform and the rear of the vehicle, as the point of engagement between the rollers and the platform drops, until the platform is fully horizontal and is resting on both of each pair of arms. Preferably the arms not carrying the rollers carry upstanding pins for engaging in slots in the underside of the plaform, to lock the latter onto the arms and prevent the doors from being sprung further open so as to possibly cause the platform to slip off the arms when under load.

The hoist means conveniently comprises a double acting pneumatic or hydraulic ram mounted with a door, having attached to its displaceable member a first pulley around which a wire, rope or chain passes having the end attached to the carriage within the door and its other end attached to the door, the wire, rope or chain passing around a second pulley attached to the top of the door, whereby extending the ram lowers the carriage and retracting the ram raises the carriage. The stroke of the ram may be magnified to any desired extent in manner known per se by using multiple pulleys and passing the wire, rope or chain around the different pulleys in turn in the form of a block and tackle. In this way a ram having say a stroke of 1 metre can be used to displace a carriage through a vertical height of say 3 metres.

When in its upright condition, the hinged platform shuts off the lower rear of the load carrying compartment and by designing the doors to have a sufficient clearance when closed, the upright platform can be readily accommodated within the thickness of the doors when shut.

In a similar manner the upper rear of the compartment can be shut off by a second hinged flap, pivotally joined to the roof of the vehicle and adapted to hang down vertically therefrom.

Means is preferably provided for lifting the flaps (when the doors are fully open) relative to the rear of the vehicle, so as finally to extend rearwardly in a generally horizontal manner between the tops of the two doors so as to define a flat roof-like structure between the two doors.

Where the proportions of the vehicle (height to width) allow, the upper hinged flap may itself be formed from two panels, one of which is hinged to the roof and the second of which is hinged to the other parallel edge of the panel suspended from the roof, the size of the former being such as just to extend rearwardly from the rear of the vheicle by the same amount as do the doors, to form an extension of the vehicle roof, and the said second panel being adapted to hang down in a generally vertical manner from the rearmost edge of the roof extension panel, when the latter is horizontal to further assist in closing off the compartment defined by the two open doors and the roof panel, at the rear of the vehicle.

By locating the rear of the vehicle an appropriate distance from the vertical wall containing an opening through which trolleys or the like can pass for loading and unloading, so that the rear edges of the doors and the rear edge of the roof extension are all but touching the wall, so the vehicle is effectively sealed against the wall and heat loss during loading or unloading can be substantially reduced.

It is of course important for this arrangement to work, that the hinged platform does not extend rearwardly (when in its horizontal position) a greater extent than do the doors when the latter are in their rearward, open, position.

Typically the upper roof extension panel is raisable and lowerable by means of at least one hydraulic or pneumatic ram operating between the roof of the vehicle and the flap.

In a similar manner, the hinged platform may itself include a panel hinged to its outboard edge and normally clipped to the outboard face of the platform (ie the underside when the latter is in its horizontal position), but which can be unclipped and swing outwardly and rearwardly to form a ramp up which goods can be rolled as on trolleys or the like, on to the platform, which can thereafter be raised as required.

Conveniently the load is carried within trolleys which run on rollers and which on being presented to an opening at the rear of a load carrying compartment can be pushed into the compartment so as to engage a walking beam drive and trolley retention mechanism located on the deck of the compartment.

The invention is particulary applicable to a load carrying vehicle having a refrigerated interior.

The hinge points by which the platform can be pivotally joined to the rear of the vehicle conveniently include relatively slidable members which in one position define upwardly open jaws for receiving a round section bar attached to the edge of the platform and in a second position define partially or fully closed jaws entrapping the bar therein so as to lock the platform to the vehicle whilst permitting pivoting relative thereto about the axis of the trapped round bar.

Preferably two such hinge points are provided.

Preferably the relative movement of the slidable member of each hinge point is effected by means of a pneumatic or hydraulic ram or an electric motor. Movement in a sense to close the jaws is most appropriately effected by spring means so that the hinge points cannot be released without power being available.

The invention will now be described by way of example with reference to the accompanying drawings, in which:

Figure 1 is a perspective view of the rear of a lorry having a refrigerated load carrying compartment and tail lift constructed in accordance with the present invention, shown with the doors open and partly cut away, with the lifting platform a lowered position;

Figure 2 is a perspective view to a larger scale, showing the interaction between the roller bearing arm (of one of the carriages in one of the doors) and the rear/underside of the loading platform;

Figure 3 is an elevation of the carriage guide and drive means as fitted within one of the doors;

Figure 4 is an elevation of the carriage shown in perspective in Figure 2, and Figure 4A a plan view of the interaction between guide and carriage;

Figure 5 is a plan view of the platform showing where it is hinged to the rear of the lorry, and where it can be hinged to an extension platform or ramp, not shown;

Figure 6 is a section through a part of the edge of the platform of Figure 5 showing the construction of the latter and a hinge point, to an enlarged scale relative to Figure 5;

Figure 7 is a plan view of the latter to the same enlarged scale;

Figure 8 is a side elevation partly in section of the upper edge of the platform when the latter is in its stowed condition, showing detail of the latch which holds the platform in this position;

Figure 9 is a perspective view of one of the two female hinge points at the rear of the lorry to which the platform is attached when not in use as a tail lift, with the sliding member of the female hinge point in a fully extended position ready to receive a hinge pin;

Figure 10 is a side view of the unit shown in Figure 9 with the sliding member shown engaging a hinge pin of the platform;

Figure 11 is a top view of the female hinge point of Figure 10 shown in cross-section;

Figure 12 is a side view of the upper canopy assembly shown in its two positions;

Figure 13 is a side view in section of the hinge joint between the two parts of the upper canopy assembly.

Detailed description of the drawings

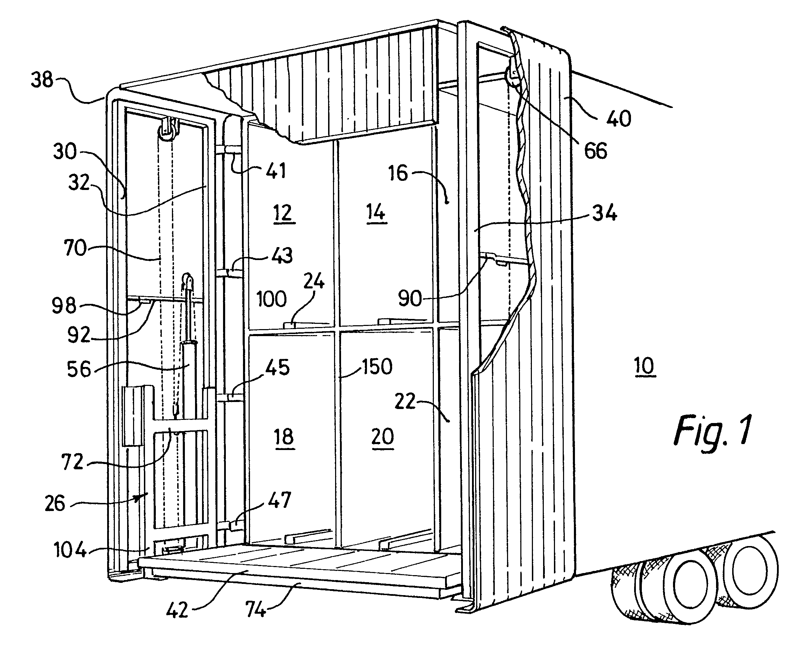

As will be seen from Figure 1 the refrigerated load carrying compartment of a lorry generally designated 10 is divided internally into six separate sub-compartments 12, 14, 16 and 18, 20, 22 each of which includes a walking beam mechanism (such as 24 in compartment 12). The lorry is designed to carry a line of pallets in each of the sub-compartments, and the walking beam mechanisms are designed to cooperate with the undersides of the pallets which otherwise run freely on rollers (not shown).

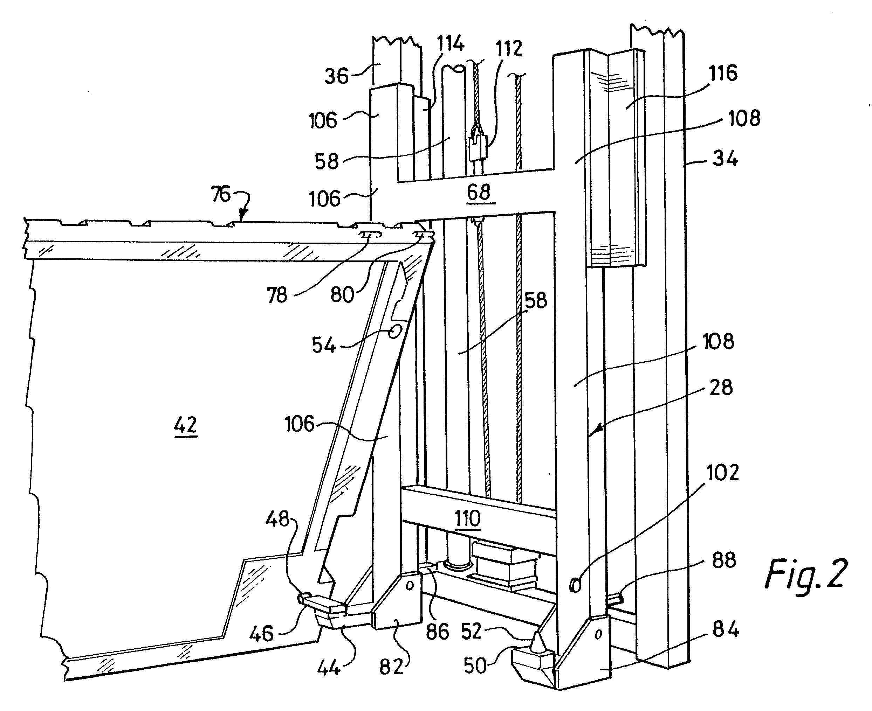

In order to load pallets into the sub-compartments (three of which are quite a high level off the ground), a tail-lift is provided and in accordance with the invention, the lift comprises a pair of carriages 26, 28 (see Figure 2) mounted for raising and lowering on tracks 30, 32 and 34, 36 (again see Figure 2), in the two rear doors 38, 40. The tracks (and thereby the doors) are hinged to the sides of the lorry so as to be capable of being swung from their closed position (not shown), (in which they extend across the open ends of the six sub-compartments 12, 14 etc. and cooperate to shut off the rear of the load carrying compartment of the lorry) to an open position as shown in Figure 1. There are four hinges associated with each door and these can be seen for door 38 in Figure1 , and are identified by reference numerals 41, 43, 45 and 47. The hinges cause the doors to describe an arc centred about a vertical axis spaced outwardly from the side walls of the load carrying compartment, so that when the doors are fully opened and extend perpendicularly relative to the rear of the lorry, the inside surfaces of the doors are spaced apart by a distance at least equal to the overall external width of the load carrying compartment 10 of the lorry.

This is important since hinged to the floor of the compartment 10 across the rear of the lorry is a large rectangular flap 42 which as will be described, can be detached so as to form a platform for a tail lift at the rear of the lorry. Since this flap must extend across the complete width of the vehicle, it is important that the internal spacing between the doors is adequate to permit this.

The flap 42 is normally held in an upright position by a latch (which will be described later) but when this is released the flap can pivot in a rearward direction so as to be lowered into the position shown in Figure 1.

The control of the downward pivoting (and upward pivoting for stowing after use) is provided by a pair of arms which extend laterally from the two carriages 26, 28 and of which one is shown at 44 in Figure 2. Each such arm 44 carries a transversely extending member 46 at the outboard end of which is a roller 48 which engages the rear (underside) of the flap 42 and as shown in Figure 2, serves to prevent the flap from dropping, except under control. Thus as the carriages 26, 28 are lowered past the flap, in a generally downward direction, the rollers 48 engage the rear of the flap and if it has become unlatched from the lorry, it is permitted to swing rearwardly and downwardly as the point of contact between the supporting rollers 48 and the flap drops. Eventually after the rollers 48 reach the bottom hinged edge of the flap 42, so the latter can become horizontal and engage a further pair of support arms also carried by the two carriages 26, 28, and of which one can be seen at 50 in Figure 2. The arms include upstanding tapering pins 52 for engaging in apertures (one of which is shown at 54) on the underside of the flap.

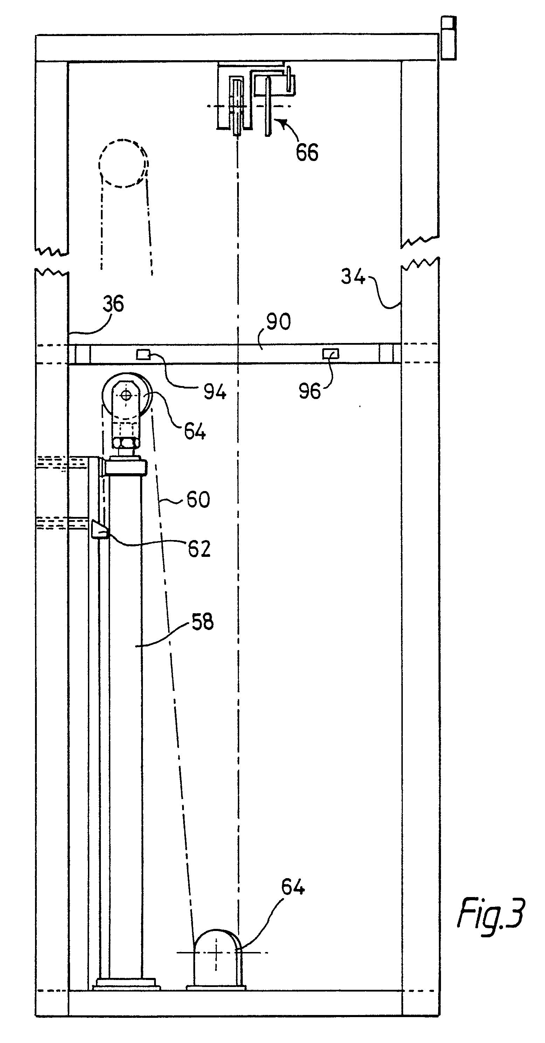

Once the flap is secured in position onto the pins 52 and is resting on all four arms (two of which only are shown at 44 and 50 in Figure 2), the flap can be lifted off its hinges (in manner to be described) by raising the two carriages 26, 28. To this end hydraulic rams 56 and 58 are mounted in the two doors (see Figures 1 to 3) and attached to the assembly containing the carriage guides 34, 36 and 30, 32 respectively. A chain 60 is anchored at 62 and passes around a chain wheel 64 at the upper end of the displaceable part of the cylinder 58, and thereafter passes around chain wheels at 64 and 66 and finally extends downwardly to be attached at its other end to an cross member 68 of the carriage 28, shown in Figure 2. (In a similar way a second chain 70 extends between the cross member 72 of the carriage 26 and the displaceable part of the cylinder 56).

If the two rams 56, 58 are extended, the result is that carriages 26, 28 rise. If they are retracted the carriages drop.

In order to allow pallets to be loaded onto the flap from ground level, a second flap 74 is hinged to the upper edge 76 of the main flap 42, and as shown in Figure 1 is normally tucked up underneath the flap 42 and held in place by a latch (not shown), until required. This second flap is not shown in Figure 2, although the hinge points by which it is attached to the edge 76 are clearly visible as at 78, 80.

The arms 44, 50 each form part of a bracket 82, 84 respectively, each of which is partially attached to the lower end of one of the two uprights forming the carriage 28. In the same way the corresponding arms (not shown) associated with the other carriage 26 are likewise carried by brackets (not shown) also pivotally attached to the carriage 26. Each bracket includes an outwardly extending finger and these are clearly shown at 86 and 88 in the case of the brackets 82 and 84 of Figure 2. The purpose of the fingers 86, 88 is to cause the brackets to pivot upwardly as the carriages are raised beyond a certain height into an elevated position where they are stowed when the tail lift is not required (after of course the flap 42 has been detatched therefrom). To this end the rail assembly 34, 36 on the one side and 30, 32 on the other side, include transversely extending bars 90 and 92 respectively (see Figures 1, 2 and 3) and rollers at 94, 96 on bar 90 engage the fingers 86, 88 of the brackets of the carriage 78 (and rollers 98, 100 on bar 92 the corresponding fingers (not shown) on the brackets of the other carriage 26), to produce this upward pivoting action of the brackets, as the carriages are raised.

Apertures are provided at 102, 104 in the uprights of the two carriages 26, 28 to accommodate the tapering pins such as 52 (see Figure 2), after their upward pivoting.

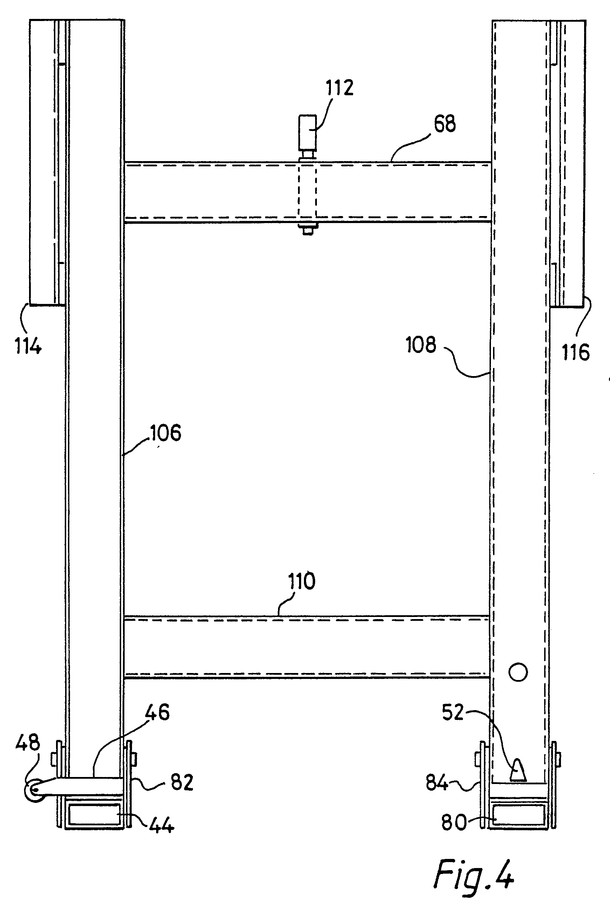

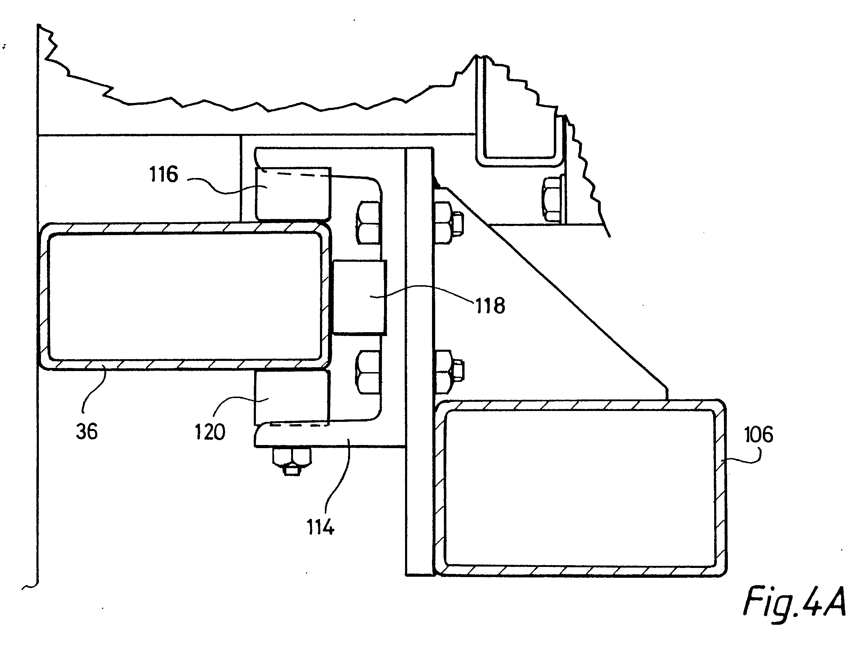

The construction of each carriage is best seen in Figure 4. The carriage shown in 28 as shown in Figure 2 is made up of a pair of uprights 106, 108 joined by bridging members 68 and 110. The upper bridging member 68 includes a chain attachment point 112 and two uprights 106, 108 which define sliders for engaging and sliding up and down upright rails 36 and 34.

Figure 4A shows in cross-section the way in which the channel 114 engages the upright rail 36 by means of three Nylon (Registered Trade Mark) blocks 116, 118, 120 and is secured to the upright 106 of the carriage 28.

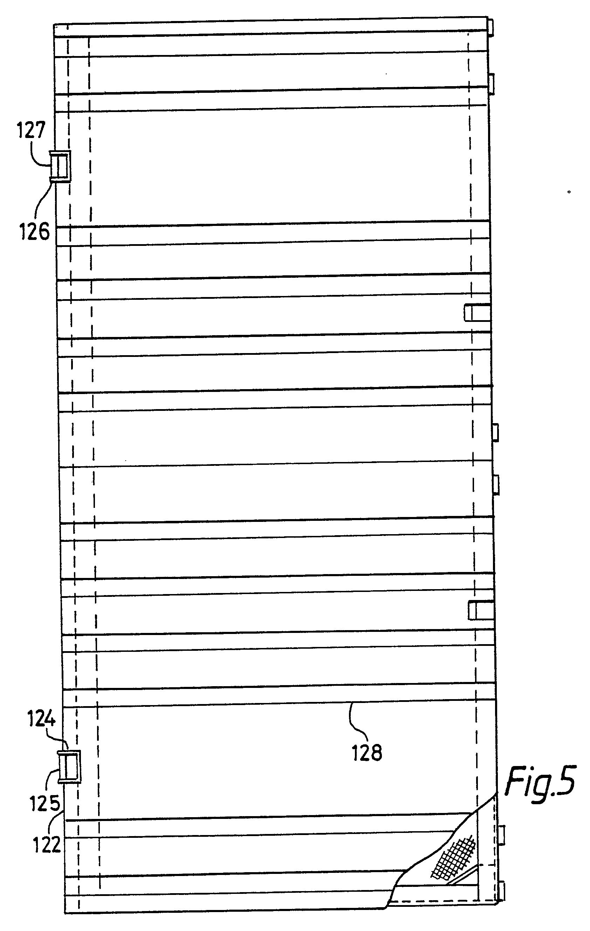

Figure 5 is a plan view of the flap 42. Along the edge 122 are located two U-shaped brackets 124, 126 having circular section bars 125, 127 extending across each to provide hinging between the flap 42 and female hinge mountings (to be described). The flap is formed from sheet metal which is itself formed by bending to define parallel channels for guiding the rollers of pallets to be loaded into the sub-compartments of the lorry. One such channel is shown at 128.

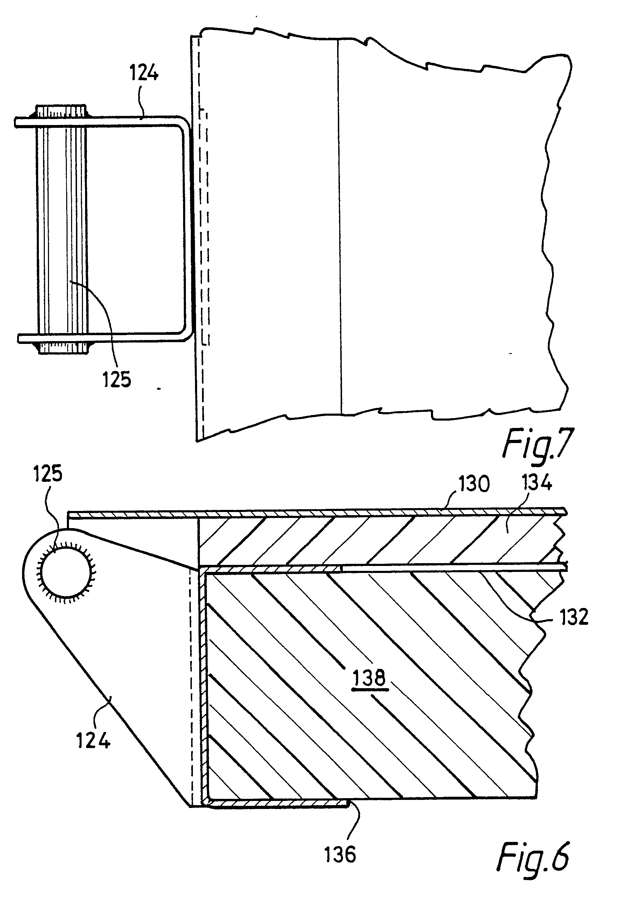

Figure 6 is a cross-section through the flap 42 and shows one of the brackets 124 and the round section bar 125 associated therewith. The upper metal sheet 130 is separated from an intermediate flat metal sheet 132 by a structural foam sandwich 134 the upper flat sheet 132 is likewise separated from the lower flat sheet 136 (forming the underside of the flap) by a second structural foam sandwich 138. Foam is chosen having good thermal insulation properties, so that the flap, when upright, acts as additional thermal insulation at the rear of the load carrying compartment.

Figure 7 simply gives further detail of the brackets 124 and round section bar 125.

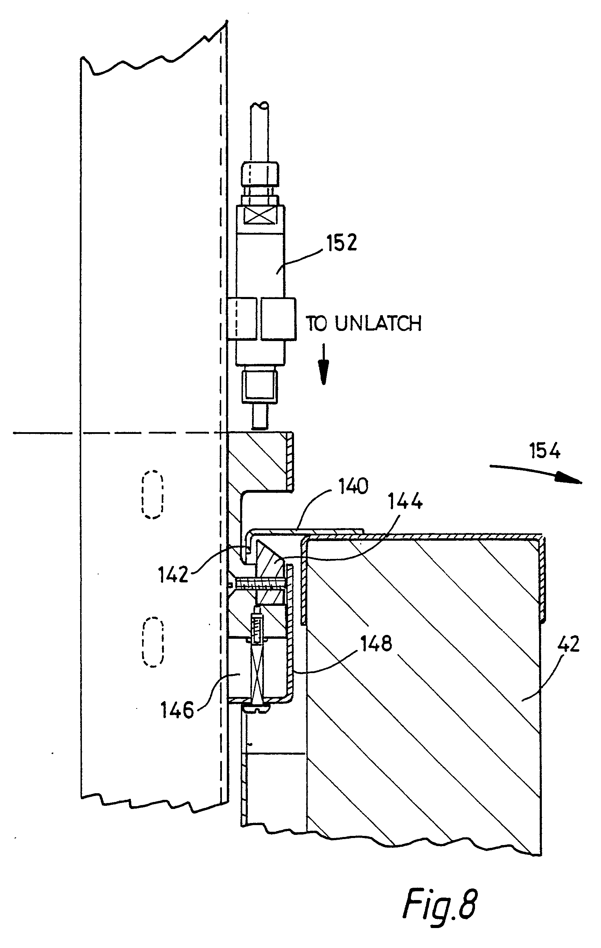

Figure 8 shows in cross-section the latch mechanism which holds the flap 42 upright. The latter includes a cantilevered bracket 140 having a downwardly extending lip 142 at its outboard edge for engaging behind a keeper 144 which is resiliently displaceable in a downward direction against a spring 146 in a retaining housing 148. The latter is planted on one of the uprights such as 150 (see Figure 1) defining the sub-compartments and above it is located a pneumatic cylinder 152 which when energised, acts in a downward manner on the keeper 144, to release the lip 142. On being released, the flap can pivot in the direction of arrow 154.

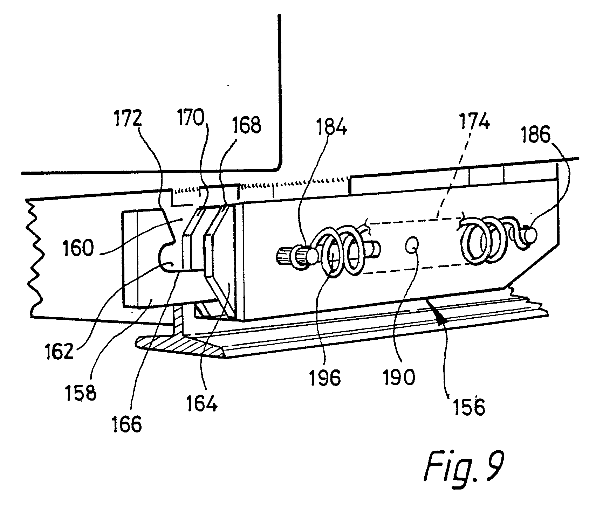

Figures 9, 10 and 11 show the detail of one of the two female hinge points required on the lower rear edge of the compartment 10, for receiving the circular section bars 125, 127 of the hinge brackets 124, 126 of Figure 5.

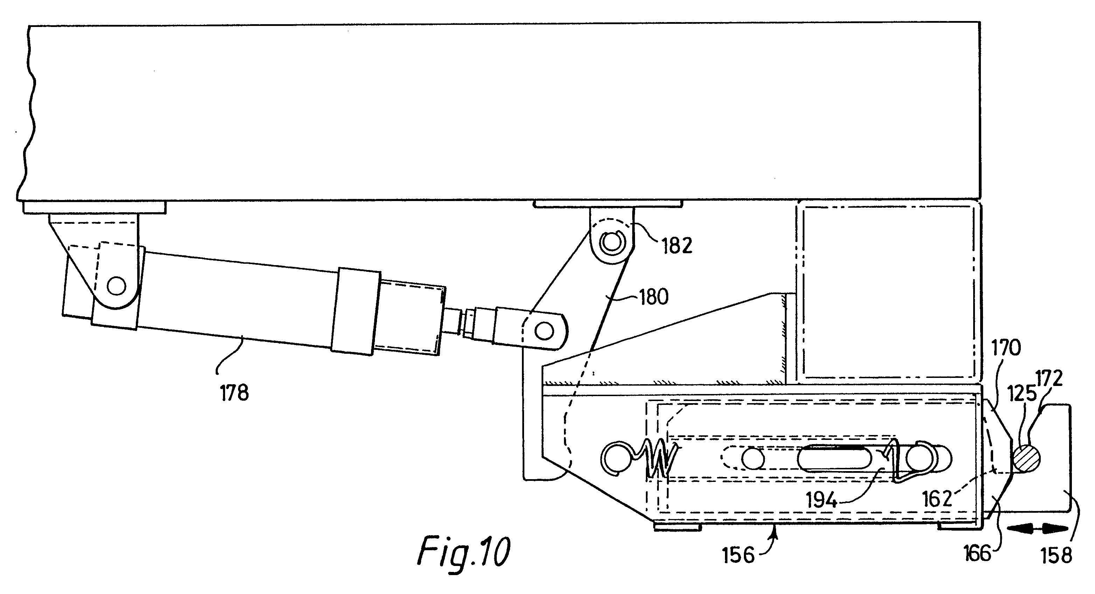

The female hinge point is made up of a stationary support generally designated 156 secured to the underside of the lorry and a central slidable plate 158 the upper edge of which is cut away to form an entrance 160 into a slot 162. Fixed side cheeks 164, 166 (typically of Nylon (Registered Trade Mark)) on opposite sides of the plate 158 are chamfered top and bottom, and the upper chamfers 168, 170 define with a complementary chamfer 172 in the entrance 160, a converging mouth, into which a circular section bar 125 (127) can be received, as best seen by considering Figure 10 where the bar 125 (forming a hinge pin) is shown received in the slot 162. The slot 162 is undercut below the chamfer 172 so that when the slidable plate 158 has been drawn into the stationary support 156, the round bar 125 is held captive between the plate 158 and the two fixed side cheeks 164, 166.

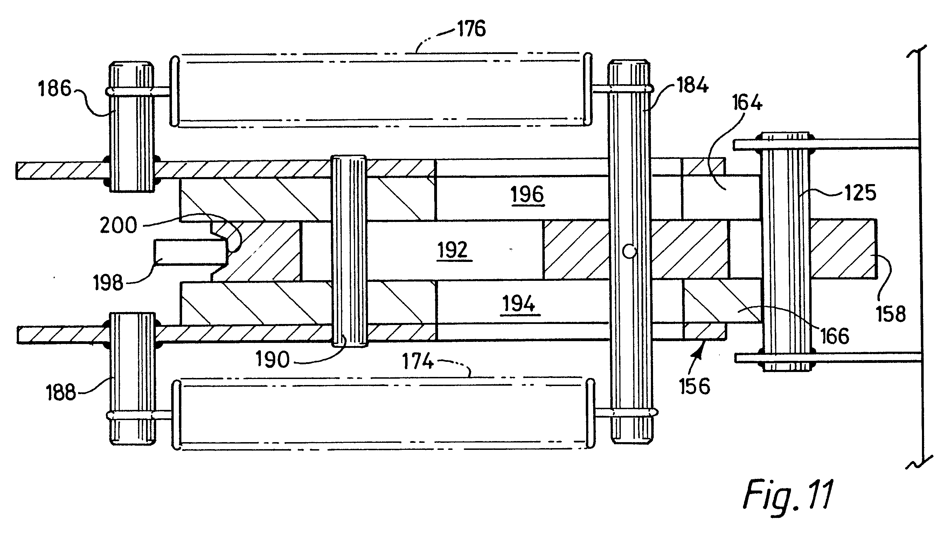

The slidable plate 158 is biased by a pair of springs 174, 176 (see Figure 11 in a direction to enclose and trap the bar 125, and is displaceable in the opposite sense by an air cylinder 178 (see Figure 10), which when energised displaces a thrust arm 180 pivoted at 182 to the underside of the lorry, in a rearward direction - the lower end of the arm 186 acting on the inboard end of the slidable plate 158.

Tension in the spring is transmitted to the plate 158 via a pin 184 and pins 186, 188 fixed to the walls of the U-shaped housing 156 in which the cheeks 164, 166 are secured. The latter are held in position by a second pin 190 which also serves as an end stop for the plate 158 which includes a slot 192 through which the pin 190 passes, the other pin 184 is secured rigidly to the plate 158 but is a clearance fit in slots 194, 196.

As shown in Figure 11, the lower end 198 of the arm 180 is shown engaging in a recess 200 in the inboard end of the plate 158.

Whilst the flap 42 is hinged to the rear of the lorry, the cylinder 178 remains unenergised and the two hinge pins formed by the bars 125, 127 remain held captive in their respective hinge points (one of which is shown in Figure 9).

When the flap is to be lifted out of its hinge points, each air cylinder 178 is pressurised so as to open up the jaws formed by the plate 158 and the cheeks 164, 166 and the flap 42 can then be lifted upwardly (by raising the carriages 26, 28).

In order to allow the flap to drop below the hinge points, the plates 158 must be capable of being fully retracted by the springs 174, 176 so that the edge of the flap can ride up and over the chamfered cheeks 164, 166 - and it is for this reason that the latter are chamfered both above and below.

Whilst the flap 42, when upright, covers part of the lower openings at the rear of the load carrying compartment, the upper openings, and the upper regions of the lower openings, would otherwise remain uncovered. To this end, a second flap assembly is hinged to the rear of the lorry roof, as shown in Figure 1, and when hanging down, this covers the otherwise uncovered openings. When raised, it partly acts as an extension to the roof of the lorry and partly as a rear wall to the compartment within which the flap 42 rises and falls.

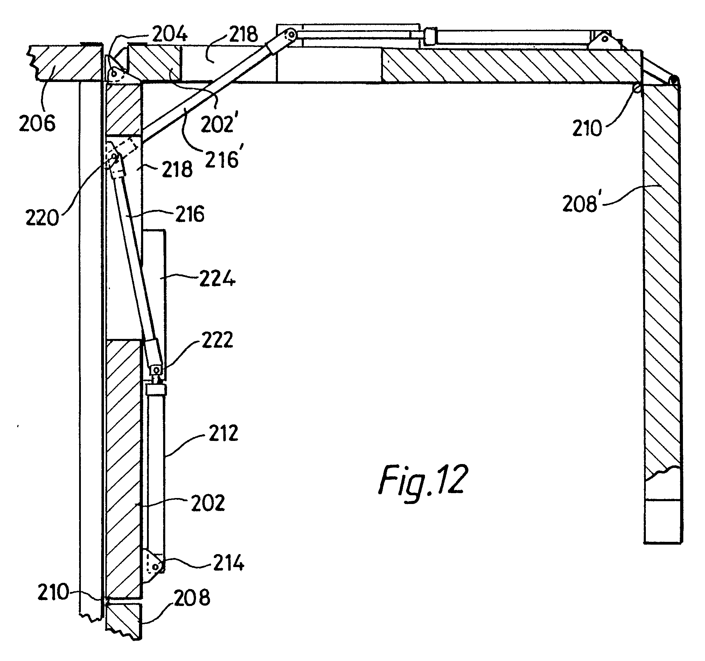

Figure 12 shows the construction and operation of this upper flap assembly. A first rectangular flap 202 is hinged at 204 to the roof 206 of the vehicle and a second flap 208 is hinged to the free edge of the first flap 200, by a hinge 210.

A hydraulic ram 212 is mounted on the external surface of the first flap 202 and is attached to a pivot point 214 on the flap. The extending end of the ram is pivotallly joined to a thrust rod 216 which extends through a slot 218 in the flap and is pivotally attached at its opposite end to a pivot point 200 on the rear of the lorry. The pivotal joint between the ram 212 and the rod 216, denoted by reference numeral 222 is constrained in a tunnel 224, which forces the ram 212 to remain parallel to the flap 202 so that extension and retraction of the ram effectively moves the point of attachment of the rod 216 to the flap nearer to or further away from the axis of the hinge 204 between the flap and the lorry roof.

The effect of extending the ram 212 is therefore to cause the flap 202 to swing upwardly through 90° from the position shown on the left hand side of the drawing into the position shown at 202′, where it extends rearwardly in line with the roof 206.

At the same time the lower flap 208, which is of course attached to the flap 202, is also raised, but because of the hinge joint 210, it continues to hang in a downward direction even when the flap 202 is horizontal - as shown at 202′.

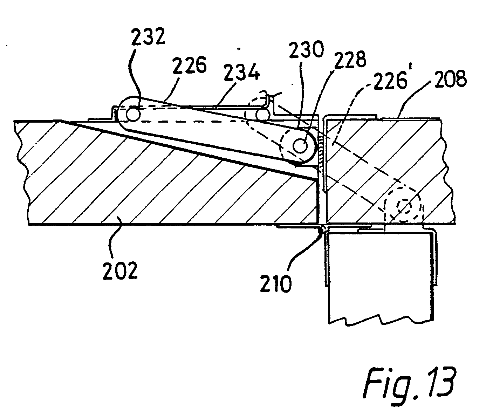

Figure 13 reveals the detail of the hinge 210 and attitude correction mechanism associated with this joint. The latter comprises a link 226 which is pivotally joined at 228 to a bracket 230 on the flap 208 but at its other end is constrained by a pin 232 to follow a straight line path parallel to the flap 202, by the engagement of the pin 232 in a guide channel 234.

The purpose of the link 226 is to prevent the weight of the flap 208 (which acts off axis to produce a clockwise turning movement about the hinge 210), from causing the flap 208 to hang at an angle to the vehicle, instead of hanging vertically a shown. Thus the length of the link 226 and the right hand end position for the pin 232 are chosen so as to just maintain a 90° angle between the flaps 202 and 208, when the former is horizontal.

For symmetry, two such attitude correction mechanisms are provided, one at each of two symmetrically arranged hinge positions between the flaps 202 and 208.

As with the flap 42, the flaps 202 and 208 are made in part from thermally insulating material so as to improve the insulation of the interior of the load carrying compartments.

It is of course important that the carriage guides in the doors extend parallel to one another and are perpendicular to the plane of the rear of the load carrying compartment. To this end restraints (not shown), preferably adjustable, are provided to prevent the doors (and therefore the carriage guides) from being swung back too far. The restraints are conveniently associated with one or more of the hinges between the doors and the side walls of the load carrying compartment of the lorry.

## Claims

1. A load carrying vehicle, in which the rear of the load carrying compartment can be opened to admit the loading and unloading of articles and which includes at least two doors, which in their open position extend rearwardly of the vehicle body generally parallel to the sides thereof and which in their closed position close off the rear of the compartment, and with means for retaining the two doors in their open and closed positions, characterised by a platform (42) hingedly connected to the rear of the compartment by separable hinge means (156, 158) for tilting the platform into an upright position to enable the doors to be closed and into a horizontal position to serve as a loading platform, platform support means (26, 28) located in each of the two doors (38, 40) and engageable by the platform when the latter is tilted into its horizontal position, means for separating the platform hinge means to enable the platform to be moved upward and downward by the support means, and hoist means (56, 58) attached to the platform support means to effect the upward and downward movement of the platform.

2. A vehicle as claimed in claim 1, characterised in that the platform support means comprises a carriage movable up and down slideways (30 to 36) located within each door (38, 40), each carriage including a pair of arms (44, 50) which engage the underside of the platform.

3. A vehicle as claimed in claim 2, characterised in that each arm (44, 50) is pivotable into a lower position in which it extends in a generally horizontal manner so as to protrude into the space between the two doors (38, 40), to engage the underside of the platform (42) as the latter is lowered, and is pivotable into an upright position for stowing within the doors, so as not to protrude into the interior of the load carrying compartment when the doors are closed.

4. A vehicle as claimed in any one preceding claim, characterised in that the platform (42) can be moved from a lowermost position, at which a pallet can be rolled onto the platform at ground level, through an intermediate position at which a pallet can be loaded (eg. from a loading bay), and to at least one elevated delivery position at which a pallet can be rolled on or off the platform onto a load carrying deck (12 to 24) within the load carrying compartment.

5. A vehicle as claimed in claim 3 or claim 4, characterised in that, after the platform (42) has disengaged from said arms (44, 50), the arms are automatically pivoted into their upright positions when the carriages (26, 28) are raised above the highest delivery position, and the carriages are left in this position within the doors (38, 40) when the doors are closed, so that the arms remain in their upright position and do not protrude into the interior of the load carrying compartment when the doors are closed.

6. A vehicle as claimed in any one of claims 2 to 5, characterised in that the two arms (44) nearest to the door hinges each carry a roller (48), which engages the rear of the platform when in said upright position, so that as the carriages (26, 28) are lowered relative to the platform (42) the latter can pivot in a rearward and downward manner about the axis defined by the hinge connection between the platform and the rear of the vehicle, as the point of engagement between the rollers and the platform drops, until the platform is fully horizontal and is resting on both of each pair of arms (44, 50).

7. A vehicle as claimed in claim 6, characterised in that the arms (50) not carrying the rollers carry upstanding pins (52) for engaging in apertures (54) in the underside of the platform, to lock the platform in its horizontal position onto the arms.

8. A vehicle as claimed in any one preceding claim, characterised in that the hoist means comprises a double acting pneumatic or hydraulic ram (56, 58) mounted within each door (38, 40) , the displaceable member of the ram having attached to it a first pulley (60) around which a chain or the like passes, one end of the chain being attached to the carriage (28) within the door (40) and the other end being attached to the door, the chain passing around a second pulley (66) attached to the top of the door, whereby extending of the ram lowers the carriage and retracting the ram raises the carriage.

9. A vehicle as claimed in any preceding claim, characterised in that the separable hinge means includes relatively slidable members (158), which in one position define upwardly open jaws (162) for receiving a round section bar (125) attached to the edge of the platform, and in a second position define partially or fully closed jaws entrapping the bar therein, so as to lock the platform to the rear of the compartment whilst permitting pivoting relative thereto about the axis of the trapped round bar.

10. A vehicle as claimed in claim 9, characterised in that movement in a sense to close said jaws is effected by spring means (174, 176), so that the hinge points cannot be released without power being available.

*Fig. 1*

*Fig.2*

Fig.3

Fig.4

Fig.4A

*Fig.5*

*Fig.7*

*Fig.6*

TO UNLATCH

152

154

140

144

142

148

42

146

*Fig.8*

*Fig. 9*

EP 0 300 603 A1

Fig.10

Fig. 11

EP 0 300 603 A1

*Fig.12*

EP 0 300 603 A1

Fig.13

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| A | GB-A-1 131 564 (RATCLIFF) <br> * figures 1-4 * <br> --- | 1,2,4,8 | B 60 P 1/46 |
| A | FR-A-2 211 364 (TORTELLIER) <br> --- | | |
| A | US-A-2 498 161 (HAMILTON) <br> ----- | | |

| | | | TECHNICAL FIELDS SEARCHED (Int. Cl.3) |
|---|---|---|---|
| | | | B 60 P 1/00 |

The present search report has been drawn up for all claims

| Place of search | Date of completion of the search | Examiner |
|---|---|---|
| BERLIN | 17-10-1988 | LUDWIG H J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P0401)